# DEMANDE DE BREVET EUROPEEN

(11) **EP 1 577 821 A1**
(43) Date de publication de la demande: **21.09.2005**
(21) Numéro de dépôt: 05290498.4
(22) Date de dépôt: 07.03.2005
(51) Int. Cl.: G06F 17/60

(54) **Système de suivi optimisé de la livraison d'objets**

(30) Priorité: 16.03.2004 FR 0402681
(71) Demandeur: NEOPOST INDUSTRIE, F-92220 Bagneux (FR)
(72) Inventeur: Philip, Olivier, 13550 Noves (FR); Glaeser, Axel, 2575 Tauffelen (CH)
(74) Mandataire: Joly, Jean-Jacques

(57) **Abrégé**

Dans un procédé de suivi de la livraison d'un objet dans lequel un destinataire de cet objet s'identifie et appose sa signature sur un écran d'affichage sensible au toucher d'un terminal portable tenu en main par un livreur et comportant une interface radio pour retransmettre ces données d'identification et de signature vers un centre informatique de gestion distant, on prend au moyen d'un capteur d'images du terminal portable une image d'un récépissé de livraison de l'objet préalablement rempli par le destinataire et on retransmet cette image avec les données d'identification et de signature vers le centre informatique de gestion afin de permettre leur consultation à distance au travers d'un réseau de télécommunications.

## Description

### Domaine de la technique

La présente invention se rapporte au domaine de la logistique relative au transport de marchandises, colis ou paquets ou tout autre objet, et elle concerne plus particulièrement un système pour le suivi optimisé de la livraison de ces marchandises.

### Art antérieur

Les systèmes logistiques de suivi d'objets utilisés aujourd'hui par les transporteurs sont bien connus. Par exemple, dans le brevet US 5,313,051, il est décrit un système de suivi d'objets comportant un terminal portatif tenu en main par un livreur et muni d'un lecteur de codes à barres et d'un écran sensitif ainsi que de moyens de communication radio pour transférer les informations saisies à l'écran par ce livreur, notamment l'identification et la signature du destinataire, à un ordinateur central du transporteur. Un tel système permet au transporteur de disposer d'une information en temps réel relative aux marchandises livrées. Toutefois, cette information n'est pas disponible directement pour les clients. De plus, le récépissé de livraison qui assure la preuve de la livraison ne peut être consulté par le client qu'une fois la tournée du livreur achevé et l'ensemble des récépissés remis à un centre de numérisation depuis lequel leur consultation devient possible au travers d'un réseau de télécommunications.

### Objet et définition de l'invention

La présente invention a donc pour objet de pallier les inconvénients précités avec un procédé et un système de suivi de la livraison d'objets permettant au client d'un transporteur d'avoir une preuve en temps réel de la livraison de ses marchandises à leur destinataire. Un but de l'invention est aussi de faciliter et d'enrichir la consultation des documents de transport nécessaires à toute livraison de marchandises.

Ces buts sont atteints avec un procédé de suivi de la livraison d'un objet dans lequel un destinataire de cet objet s'identifie sur un écran sensible au toucher d'un terminal portable tenu en main par un livreur et comportant un modem radio pour retransmettre ces données d'identification vers un centre informatique de gestion, caractérisé en ce qu'en outre on prend au moyen d'un capteur d'images du terminal portable une image d'un récépissé de livraison préalablement rempli par le destinataire et on retransmet cette image avec les données d'identification vers le centre informatique de gestion afin de permettre leur consultation à distance au travers d'un réseau de télécommunications. De préférence, on prend aussi au moyen du capteur d'images du terminal portable une image numérique de l'objet livré et/ou du destinataire.

Ainsi, les données saisies par le livreur peuvent être consultées en ligne immédiatement à l'issue de cette saisie, de même que la photographie du récépissé de livraison comme celle d'un dommage affectant un éventuel colis défectueux qui pourront constituer des éléments de preuve décisifs en cas de conflit entre le transporteur et son client.

Lorsque le récépissé ne porte pas la signature du destinataire de l'objet, il peut être prévu que le destinataire de cet objet appose sa signature sur l'écran d'affichage sensible au toucher du terminal portable et que cette signature soit retransmise vers le centre informatique de gestion avec les données d'identification.

Avantageusement, on peut enregistrer au moyen d'un capteur d'enregistrement vocal du terminal portable un commentaire vocal du livreur ou du destinataire et on peut déterminer au moyen d'un capteur de position, par exemple de type GPS, la position du lieu de livraison de l'objet.

Le réseau de télécommunications est de préférence le réseau Internet.

Selon le mode de réalisation envisagé, on peut renseigner à l'écran sensible au toucher du terminal portable les informations de réserves relatives à la livraison, les équipements consignés récupérés lors de la livraison et/ou les sommes d'argent perçues lors de la livraison, les informations renseignées à l'écran sensible au toucher du terminal portable étant retransmises vers le centre d'informatique de gestion avec les autres données.

La présente invention concerne également le terminal portable de suivi de la livraison d'un objet destiné à recueillir des informations sur cet objet en vue de permettre la consultation de ces informations, comprenant un écran d'affichage sensible au toucher pour permettre à un destinataire de cet objet de s'identifier et une interface radio pour retransmettre ces données d'identification et de signature vers un centre informatique de gestion distant, caractérisé en ce qu'il comporte en outre un capteur d'images pour prendre une image d'un récépissé de livraison de l'objet préalablement rempli par le destinataire et en ce que l'interface radio retransmet cette image avec les données d'identification vers le centre informatique de gestion afin de permettre leur consultation à distance au travers d'un réseau de télécommunications.

Lorsque le récépissé ne porte pas la signature du destinataire de l'objet, il peut être prévu que ledit écran d'affichage sensible au toucher permette au destinataire d'y apposer directement sa signature.

Le capteur d'images est avantageusement un capteur du type CMOS ou CCD, l'interface radio un modem radio GPRS ou UMTS et le réseau de télécommunications le réseau Internet.

Le terminal peut comporter en outre un capteur d'enregistrement vocal pour enregistrer un commentaire vocal et un capteur de position, par exemple de type GPS, pour déterminer les coordonnées du lieu de livraison de l'objet. Il peut avantageusement comporter un dispositif d'impression intégré pour délivrer un reçu ainsi qu'un lecteur-interrogateur intégré de transpondeur radiofréquence.

### Brève description des dessins

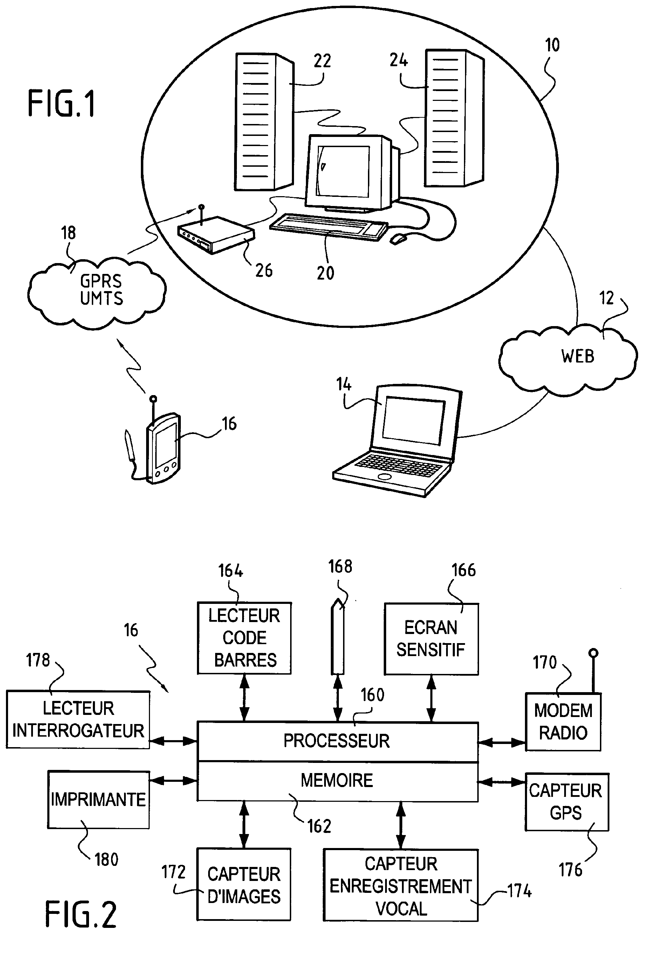

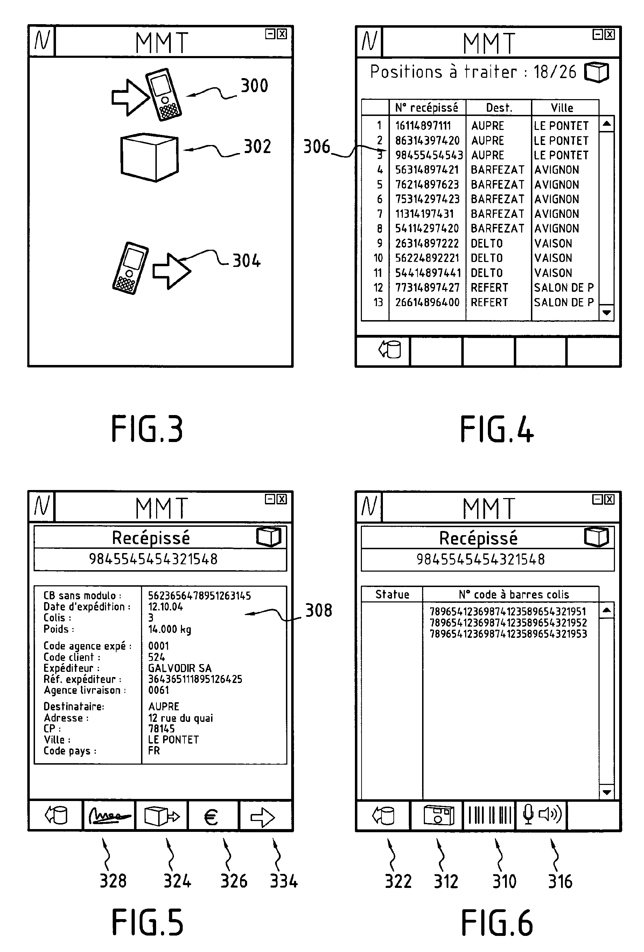

L'invention sera mieux comprise au vu de la description détaillée qui va suivre accompagnée par des exemples illustratifs et non limitatifs en regard des figures suivantes sur lesquelles :
. la figure 1 est une vue générale d'une architecture de réseau informatique permettant le suivi de la livraison d'objets selon l'invention, et
. la figure 2 illustre la structure interne d'un terminal portable multifonctions mis en oeuvre dans l'architecture de réseau de la figure 1, et
. les figures 3 à 13 représentent différentes pages-écrans du terminal de la figure 2 durant le suivi de la livraison d'objets à son destinataire.

### Description détaillée de modes de réalisation

La figure 1 illustre l'architecture d'un réseau informatique nécessaire à la mise en oeuvre selon l'invention d'un suivi informatisé de la livraison de marchandises, colis ou paquets ou encore tout autre objet de même nature, y compris la sauvegarde et la mise à disposition des informations relatives à ces marchandises. Elle est organisée autour d'un centre informatique de gestion distant 10 relié à un premier réseau de télécommunications 12 de type Internet. Le centre informatique de gestion comporte un ou plusieurs serveurs informatiques, par exemple un serveur 20, auquel sont reliées des bases de données 22, 24 dont une base de données d'images 22 accessible depuis des postes utilisateurs, par exemple un ordinateur personnel 14, au travers du réseau Internet. Le serveur est aussi pourvu d'un modem radio 26 pour recevoir des données d'un terminal portable multifonctions 16 au travers d'un second réseau de télécommunications 18 de type GPRS ou UMTS.

Avec cette architecture, il est possible au client d'un transporteur de suivre en temps réel la livraison de ses marchandises à leur destinataire. Ce suivi s'effectue très simplement au travers du réseau Internet 12 depuis un poste informatique quelconque du client, ordinateur personnel 14 ou tout autre équipement informatique permettant un accès au réseau Internet, les informations relatives à la livraison (nom et signature du destinataire, code à barres de l'objet livré, etc.) ayant été préalablement saisies chez le destinataire au niveau du terminal portable multifonctions 16 tenu en main par un employé du transporteur, en général un chauffeur-livreur, et transmises immédiatement en temps réel au centre informatique de gestion de ces informations 10 via le réseau de télécommunications 18. On notera qu'il n'est pas obligatoire que le centre informatique de gestion appartienne au transporteur et qu'un organisme tiers assurant en son nom le suivi de ses livraisons peut tout aussi bien convenir.

La structure interne du terminal portable multifonctions est illustrée à la figure 2. Elle est organisée autour d'un processeur de traitement numérique 160 programmé pour exécuter des instructions de commande contenues dans une mémoire de données numériques 162 en fonction d'évènements survenant au niveau de ses différents éléments d'entrée/sortie. Il s'agit principalement d'un lecteur de codes à barres 164 pour lire un code à barres porté en général sur l'objet à livrer et dont les données correspondantes seront ensuite stockées dans la mémoire de données numériques, d'un écran d'affichage sensible au toucher 166 pour afficher les instructions de commande et pour servir de moyen d'entrée à des données (notamment le nom et la signature du destinataire) qui seront ensuite stockées dans la mémoire de données numériques, d'un stylet 168 pour sélectionner ces instructions de commande et pour saisir des données relatives à l'objet ou au destinataire de cet objet et devant être entrées sur l'écran d'affichage, et d'une interface radio, de préférence un modem radio GPRS ou UMTS 170, pour établir une communication radio avec le serveur informatique 20 (via sa propre interface 26).

On notera, bien entendu, que classiquement le processeur comporte une horloge et la mémoire une zone en lecture seule (par exemple de type ROM) et une zone réinscriptible (par exemple de type RAM) et que le stylet peut éventuellement être remplacé par un simple doigt. On notera également que le terminal peut avantageusement être pourvu d'un clavier.

Selon l'invention, ce terminal comporte en outre un capteur numérique d'images 172, de type CMOS ou CCD, pour prendre une image d'un récépissé de livraison de l'objet préalablement rempli par le destinataire et un capteur numérique d'enregistrement vocal 174 pour enregistrer un commentaire vocal du livreur ou du destinataire en rapport avec la livraison, par exemple en cas d'émission de réserve à la livraison, le processeur de traitement numérique étant programmé pour stocker dans la mémoire de données numériques à la fois cette image et ce commentaire vocal enregistré. En outre, il est prévu de préférence un capteur de position, par exemple de type GPS 176, pour déterminer avec précision les coordonnées du lieu de livraison de l'objet, le processeur de traitement numérique étant également programmé pour stocker ces coordonnées de position dans la mémoire de données numériques. Bien entendu, ce capteur peut aussi servir pour une géolocalisation de véhicule et le suivi de la livraison durant son transport. De façon facultative, le terminal peut aussi inclure un lecteur-interrogateur 178 de transpondeur radiofréquence lorsque ceux-ci en sont pourvus et avantageusement un dispositif d'impression 180 pour délivrer un reçu pour le destinataire susceptible de compléter voire de remplacer le récépissé de livraison (ce dispositif d'impression pourrait aussi être externe). On notera que le terminal portable peut avantageusement être relié à un lecteur de carte de paiement pour la réalisation de toutes les transactions financières liées à la livraison.

Le procédé de suivi de livraison d'objets selon l'invention est maintenant décrit en regard des figures 3 à 13 qui montrent différentes pages-écrans apparaissant successivement sur le terminal portable multifonctions selon les commandes sélectionnées par son utilisateur, en principe un chauffeur-livreur chargé de la livraison des marchandises à un ou plusieurs destinataires.

La figure 3 illustre un exemple de page d'accueil apparaissant sur le terminal en absence de toute action. Y sont représentées différentes icônes correspondant aux fonctions accessibles au chauffeur-livreur, l'accès se faisant par un simple clic, par exemple à l'aide du stylet. Par exemple, une première icône 300 peut correspondre au chargement du terminal, c'est à dire à l'introduction dans sa mémoire de données numériques d'une liste de marchandises à livrer. Cette introduction peut s'effectuer individuellement à partir de l'écran sensitif ou à partir d'un clavier du terminal (lorsqu'il existe) ou encore plus simplement par transfert global depuis un poste informatique quelconque au travers de la liaison radio (ou de tout autre liaison filaire ou non, notamment infra-rouge, lorsque le terminal en est pourvu). Une deuxième icône 302 permet de visualiser la liste des livraisons à effectuer entrée préalablement afin d'en sélectionner une particulière correspondant à un destinataire déterminé. Une troisième icône 304 permet de lancer la transmission de données vers le centre informatique de gestion lorsque toutes les saisies relatives à une livraison donnée ont été effectuées.

La figure 4 illustre la page-écran apparaissant après que l'opérateur a cliqué sur la deuxième icône 302. C'est une liste de toutes les livraisons à effectuer lors de sa tournée avec par exemple pour chacune un numéro de récépissé, un nom de destinataire et une ville de destination. Le détail de chaque livraison apparaît en cliquant sur la ligne correspondante.

Par exemple, en cliquant sur la troisième ligne 306 apparaît la page écran de la figure 5 où figure sous le numéro de récépissé tous les renseignements utiles sur la livraison retenue, par exemple : une référence de l'expéditeur, une date d'expédition, un nombre de colis concerné par la livraison, un poids total de ces colis, un code agence d'expédition, un code client, un nom d'expéditeur, un code agence de livraison, un nom de destinataire et une adresse de destinataire.

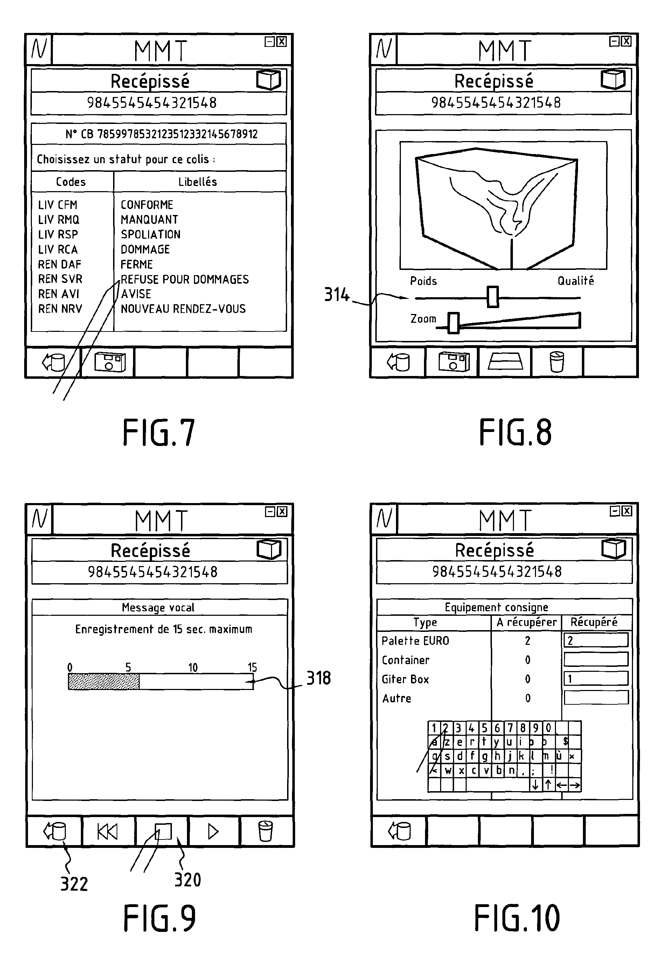

Le détail des colis peut être obtenu en cliquant sur la ligne 308 correspondant par exemple au nombre de colis. Apparaît alors la page-écran de la figure 6 où figure le code à barres de chacun des colis et leur statut respectif qui doit être renseigné par le chauffeur-livreur au moyen du lecteur de codes à barres dont une icône spécifique 310 apparaît alors par exemple en bas de cette page-écran. Une action sur cette icône, le lecteur de codes à barres du terminal ayant été préalablement dirigé vers un premier colis, faisant apparaître en surlignage ou en clignotement le code à barres correspondant et ouvrir en surimpression une fenêtre de choix de statut pour ce colis comme le montre la figure 7. Il peut être proposé par exemple entre les choix suivants : colis conforme (statut LIV CFM), colis manquant (LIV RMQ), colis refusé (REN SVR), destinataire absent (REN DAF), destinataire à contacter à nouveau (REN NRV). Un clic sur « colis conforme » permet alors d'inscrire les initiales correspondantes LIV CFM dans la colonne statut associée au code à barres lu. Et ainsi de suite pour tous les colis sélectionnés.

On notera qu'il est aussi possible d'ajouter un colis dont le code à barres vient alors s'afficher en sus de la liste préétablie si l'opérateur par exemple place le lecteur de codes à barres devant un colis non répertorié. On notera également que cette identification est faite en général en présence du destinataire, notamment pour l'affectation du statut « colis refusé ».

En outre, dans ce dernier cas, il peut être intéressant de se ménager une preuve de la raison du refus d'accepter le colis par son destinataire en prenant une photographie du colis refusé par exemple du fait de son endommagement. Cela se fait très simplement en cliquant sur une icône spécifique 312 qui met en action de capteur d'images du terminal. La photographie prise qui apparaît alors est illustrée à la figure 8 qui montre la page-écran correspondante. Les paramètres de l'image (contraste, luminosité, zoom) peuvent être réglés si nécessaire classiquement au moyen d'une barre de réglage 314. Bien entendu, cette fonction n'est pas limitée à la photographie du colis et il est tout à fait possible aussi de prendre par exemple celle du signataire du récépissé.

De même, une action sur une icône de commentaire 316 permet si nécessaire d'ajouter un commentaire vocal du chauffeur-livreur ou du destinataire en donnant accès à la page-écran illustrée à la figure 9 qui affiche un sablier 318 matérialisant une durée d'enregistrement, par exemple limitée à 15 minutes. Une barre de réglage 320 permet de régler classiquement les paramètres d'enregistrement. Une fois l'enregistrement réalisé, un premier clic puis un second sur une icône de retour 322 permet de revenir à la page-écran de la figure 5 où figure deux icônes dont l'activation est facultative et dépend de la nature de la livraison.

La première est une icône de consignation 324 dont l'activation permet l'accès à une nouvelle page-écran illustrée à la figure 10. Cette page affiche sous le numéro de récépissé le nombre des équipements consignés par type parmi les palettes, les containers, les gitter box ou autres équipements avec pour chaque type d'équipement le nombre des équipements récupérés inscrit par le chauffeur-livreur au moyen du stylet par exemple. Elle n'est donc activée que s'il est envisagé de fournir ou récupérer des équipements consignés. Un clic sur l'icône de retour permet une nouvelle fois de revenir à la page-écran de la figure 5.

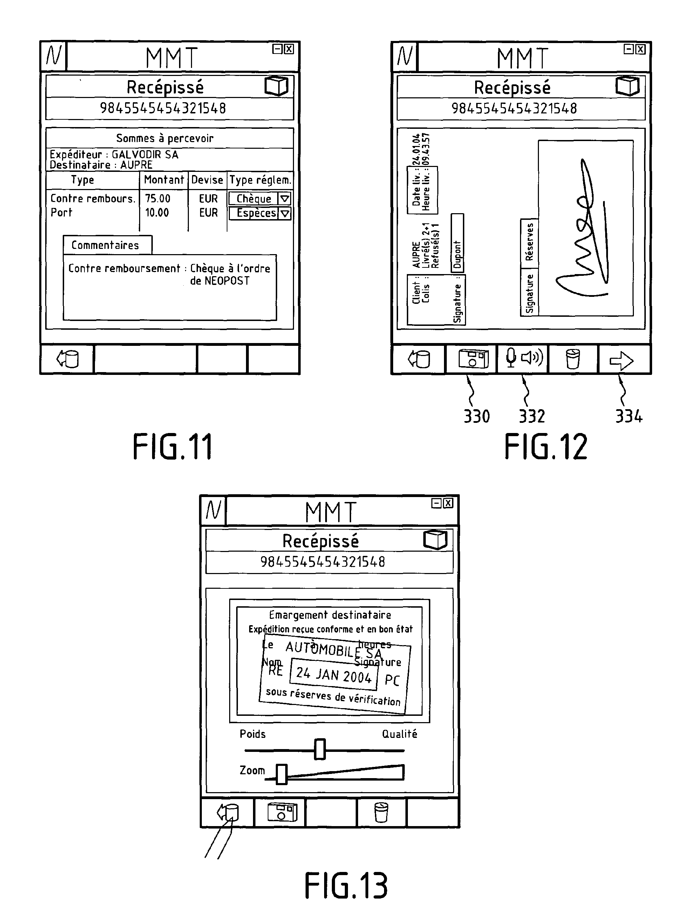

La seconde est une icône de paiement 326 pour visualiser avec la page-écran de la figure 11 les différentes sommes à percevoir auprès du destinataire. Elle n'est donc activée que si la livraison est effectuée contre remboursement où implique le règlement de frais de port (il est alors intéressant dans ce cas de délivrer un reçu au destinataire à partir du dispositif d'impression du terminal). Ainsi, par exemple, sous le numéro de récépissé peuvent être affichées le type, le montant et le moyen de règlement de ces sommes, un espace de commentaires permettant avantageusement de noter toute remarque, par exemple que le paiement est effectué par carte auprès du destinataire lorsque le terminal portable multifonctions peut être connecté à un lecteur de carte de paiement. Puis, il est fait à nouveau retour à la page-écran de la figure 5 après un clic sur l'icône de retour.

Par contre, l'activation de l'icône de signature 328 est quasi systématique puisqu'elle garantit que les marchandises ont bien été réceptionnées par une personne. Il s'agit en effet par l'affichage de la page-écran de la figure 12 de mentionner le nom du signataire du récépissé de livraison et de lui faire signer et éventuellement indiquer les réserves à la livraison, ces mentions étant portées directement sur l'écran sensitif du terminal au moyen du stylet. Pour cela, cet écran rappellera avantageusement les caractéristiques essentielles de la livraison : nom du destinataire, date et heure de livraison, nombre de colis livrés et le nombre de colis refusés. On notera toutefois que la signature à l'écran peut être omise si elle est déjà présente sur le récépissé de livraison. Des icônes de photographie 330 et de commentaire vocal 332 sont accessibles directement depuis cette page-écran pour respectivement prendre une photographie du récépissé de livraison portant le cachet commercial du destinataire comme l'illustre la figure 13 (et éventuellement la signature portée sur ce cachet) et accueillir tout commentaire éventuel du destinataire. Une fois cette preuve de la livraison recueillie, un clic sur l'icône de retour puis un autre sur une icône d'accueil 334 permet de revenir à la page d'accueil de la figure 3 pour lancer immédiatement la transmission des différentes données saisies vers le centre informatique de gestion par activation de l'icône 304.

Une fois reçue au niveau du centre informatique de gestion, ces données peuvent être consultées librement par le client sous réserve éventuellement de la fourniture d'un numéro de compte et d'un mot de passe par exemple. Celui-ci a donc accès en temps réel dès la fin de la transmission, c'est à dire quasiment au moment de la livraison, à toutes les données relatives à cette livraison et notamment une image du récépissé de livraison, une identification et signature de la personne ayant reçue les marchandises avec ses réserves éventuelles accompagnées dans ce cas d'une image du colis refusé et d'un commentaire explicite si nécessaire. Il lui est alors possible de prendre contact immédiatement avec le destinataire pour s'entretenir des problèmes rencontrés limitant ainsi les risques de contentieux ultérieurs.

Ainsi, avec le procédé de l'invention, le client est mieux et immédiatement renseigné sur les problèmes que peut rencontrer le chauffeur-livreur lors de sa livraison. Il dispose en outre d'un plus grand nombre d'informations sur sa livraison (équipements consignés, sommes perçues) qu'il peut consulter en ligne de n'importe quel lieu du fait de l'accès par le réseau Internet. Un tel procédé combine facilité d'utilisation avec un terminal portable unique, performances accrues et preuve en image de la livraison. En outre, la numérisation actuelle globale des récépissés de livraison qui est particulièrement onéreuse peut être supprimée, ces récépissés étant simplement stockés à toutes fins utiles, puisque cette numérisation est faite individuellement directement par le terminal portable.

Bien entendu, la présente invention ne saurait être limitée au seul suivi de la livraison de marchandises et elle peut aussi être envisagée pour le suivi de la collecte de marchandises auprès du destinataire, la validation de la prise en charge de ces objets étant effectuée par le chauffeur-livreur à l'aide de son terminal portable multifonctions. La photographie du récépissé de livraison est alors remplacé par celle d'un bordereau d'envoi ou de remise dont l'expéditeur attestera en apposant par exemple sa signature sur le terminal. L'ensemble des informations recueillies relatives à cette expédition est ensuite envoyées au centre informatique de gestion pour consultation ultérieure.

## Revendications

1. Procédé de suivi de la livraison d'un objet dans lequel un destinataire de cet objet s'identifie sur un écran d'affichage sensible au toucher d'un terminal portable tenu en main par un livreur et comportant une interface radio pour retransmettre ces données d'identification vers un centre informatique de gestion distant, **caractérisé en ce qu'**en outre on prend au moyen d'un capteur d'images du terminal portable une image d'un récépissé de livraison de l'objet préalablement rempli par le destinataire et on retransmet cette image avec les données d'identification vers le centre informatique de gestion afin de permettre leur consultation à distance au travers d'un réseau de télécommunications.

2. Procédé de suivi de la livraison d'un objet selon la revendication 1, **caractérisé en ce qu'**en outre le destinataire de cet objet appose sa signature sur l'écran d'affichage sensible au toucher du terminal portable et on retransmet cette signature vers le centre informatique de gestion avec les données d'identification.

3. Procédé de suivi de la livraison d'un objet selon la revendication 1 ou la revendication 2, **caractérisé en ce qu'**en outre on prend au moyen du capteur d'images du terminal portable une image numérique de l'objet livré et/ou du destinataire.

4. Procédé de suivi de la livraison d'un objet selon la revendication 1 ou la revendication 2, **caractérisé en ce qu'**en outre on enregistre au moyen d'un capteur d'enregistrement vocal du terminal portable un commentaire vocal du livreur ou du destinataire.

5. Procédé de suivi de la livraison d'un objet selon la revendication 1 ou la revendication 2, **caractérisé en ce qu'**en outre on détermine au moyen d'un capteur de position, par exemple de type GPS, les coordonnées du lieu de livraison de l'objet.

6. Procédé de suivi de la livraison d'un objet selon l'une quelconque des revendications 1 à 5, **caractérisé en ce que** le réseau de télécommunications est le réseau Internet.

7. Procédé de suivi de la livraison d'un objet selon l'une quelconque des revendications 1 à 6, **caractérisé en ce qu'**en outre on renseigne à l'écran d'affichage sensible au toucher du terminal portable des informations de réserves relatives à la livraison.

8. Procédé de suivi de la livraison d'un objet selon l'une quelconque des revendications 1 à 6, **caractérisé en ce qu'**en outre on renseigne à l'écran d'affichage sensible au toucher du terminal portable les équipements consignés récupérés lors de la livraison.

9. Procédé de suivi de la livraison d'un objet selon l'une quelconque des revendications 1 à 6, **caractérisé en ce qu'**en outre on renseigne à l'écran d'affichage sensible au toucher du terminal portable les sommes d'argent perçues lors de la livraison.

10. Procédé de suivi de la livraison d'un objet selon l'une quelconque des revendications 7 à 9, **caractérisé en ce que** les informations renseignées à l'écran d'affichage sensible au toucher du terminal portable sont retransmises vers le centre d'informatique de gestion avec les autres données.

11. Procédé de suivi de la livraison d'un objet selon l'une quelconque des revendications 7 à 9, **caractérisé en ce que** les informations renseignées à l'écran d'affichage sensible au toucher du terminal portable sont imprimées par ce terminal pour délivrer un reçu au destinataire.

12. Terminal portable de suivi de la livraison d'un objet destiné à recueillir des informations sur cet objet en vue de permettre la consultation de ces informations, comprenant un écran d'affichage sensible au toucher (166) pour permettre à un destinataire de cet objet de s'identifier et une interface radio (170) pour retransmettre ces données d'identification et de signature vers un centre informatique de gestion distant (10), **caractérisé en ce qu'**il comporte en outre un capteur d'images (172) pour prendre une image d'un récépissé de livraison de l'objet préalablement rempli par le destinataire et **en ce que** l'interface radio retransmet cette image avec les données d'identification vers le centre informatique de gestion afin de permettre leur consultation à distance au travers d'un réseau (12) de télécommunications.

13. Terminal portable de suivi de la livraison d'un objet selon la revendication 12, **caractérisé en ce que** ledit écran d'affichage sensible au toucher permet en outre au destinataire de cet objet d'y apposer sa signature.

14. Terminal portable de suivi de la livraison d'un objet selon la revendication 12 ou la revendication 13, **caractérisé en ce que** le capteur d'images est du type CMOS ou CCD.

15. Terminal portable de suivi de la livraison d'un objet selon la revendication 12 ou la revendication 13, **caractérisé en ce qu'**il comporte en outre un capteur d'enregistrement vocal (174) pour enregistrer un commentaire vocal.

16. Terminal portable de suivi de la livraison d'un objet selon la revendication 12 ou la revendication 13, **caractérisé en ce qu'**il comporte en outre un capteur de position (176), par exemple de type GPS, pour déterminer les coordonnées du lieu de livraison de l'objet.

17. Terminal portable de suivi de la livraison d'un objet selon la revendication 11, **caractérisé en ce que** l'interface radio est un modem radio GPRS ou UMTS.

18. Terminal portable de suivi de la livraison d'un objet selon la revendication 11, **caractérisé en ce que** le réseau de télécommunications est le réseau Internet.

19. Terminal portable de suivi de la livraison d'un objet selon la revendication 11, **caractérisé en ce qu'**il comporte en outre un dispositif d'impression intégré (180) pour délivrer un reçu.

20. Terminal portable de suivi de la livraison d'un objet selon la revendication 11, **caractérisé en ce qu'**il comporte en outre un lecteur-interrogateur intégré (178) de transpondeur radiofréquence.
